# EUROPEAN PATENT APPLICATION

(11) **EP 2 891 905 A1**
(43) Date of publication of application: **08.07.2015**
(21) Application number: 13832606.1
(22) Date of filing: 02.09.2013
(51) Int. Cl.: G02B 1/10, B05D 1/40, G02B 1/11, G02C 7/02

(54) **METHOD FOR MANUFACTURING OPTICAL LENS**

(30) Priority: 31.08.2012 JP 2012191868
(71) Applicant: HOYA Corporation, Tokyo 161-8525 (JP)
(72) Inventor: WATANABE,Makoto, Shinjuku-ku, Tokyo 161-8525 (JP); SATO,Daisuke, Shinjuku-ku, Tokyo 161-8525 (JP)
(74) Representative: Betten & Resch
(86) International application number: PCT/JP2013/073501
(87) International publication number: WO 2014/034926

(57) **Abstract**

A method for manufacturing an optical lens includes a preparation step (S1) in which coating solution application conditions for an optical lens substrate are satisfied, and a coating step (S2) in which a coating solution is applied to the lens surface of the optical lens substrate. The coating solution application conditions with reference to the convex surface side include a first condition and a second condition. The first condition is a condition that the angle of the axis of an optical lens substrate (1) with respect to the horizontal direction falls within a predetermined angle range. The second condition is a condition that the optical lens substrate rotates around the axis at a predetermined rotational speed. The predetermined angle range is an angle range between a maximum inclination angle of the axis at which the peripheral edge of a lens surface is positioned at the highest position of the lens surface, and a maximum inclination angle of the axis at which the peripheral edge of the lens surface is positioned at the lowest position of the lens surface. The predetermined rotational speed is a rotational speed at which the coating solution applied to the lens surface is held in a coating position.

## Description

### Technical Field

The present invention relates to a method for manufacturing an optical lens, in which a coating solution is applied to an optical lens substrate while the optical lens substrate is rotated longitudinally.

### Background Art

A plastic spectacle lens, which is one of optical lenses, is provided with performance requested of the spectacle lens by performing various coating processes on its surface. These coating processes include a primer process, a process of forming a hard coat film, and a process of forming an antireflection film.

A primer film formed by the primer process has a function of adding performance including shock resistance, adhesion, and crack mitigation using softness. A hard coat film needs to be very hard in order to improve scratch resistance. An outermost layer serving as the outer surface of the hard coat film is provided with an antireflection film. By arranging the antireflection film on the outermost layer, performance including the antireflection function, durability, and scratch resistance is further added.

A primer layer at the time of the primer process and a hard coat layer serving as a hard coat film are formed by applying a coating solution to a lens surface. As a method of applying a coating solution to a lens surface, there are a dipping method, a spin coat method, a spray coat method, and an inkjet method as disclosed in patent literature 1. Application of a coating solution by the inkjet method disclosed in patent literature 1 is performed so that a spectacle lens substrate is rotated in a state in which the lens surface is directed vertically to uniform the film thickness on the entire lens surface.

The film thickness is uniformed by dividing the lens surface into a plurality of concentric coating regions, and adjusting the amount of coating solution for the respective coating regions.

On the lens surface of a spectacle lens, interference fringes sometimes appear in a state in which various above-mentioned films are formed. It is known that the interference fringes are reduced by forming a thick hard coat film.

### Related Art Literature

### Patent Literature

Patent Literature 1: Japanese Patent Laid-Open No. 2004-122115

### Disclosure of Invention

### Problem to be Solved by the Invention

The present inventor considers formation of a thicker hard coat film in order to improve the scratch resistance of a spectacle lens and reduce the generation of interference fringes mentioned above. However, it is difficult for the conventional dipping method and spin coat method to apply, to the lens surface, a coating solution for forming a hard coat film so as to have a thickness of 5 µm or more.

In contrast, the spray coat method and inkjet method can apply the coating solution to have a thickness of 10 µm or more. However, when the coating solution was applied by the coating or the inkjet method to have a thickness of much more than 10 µm, a new problem in which the film thickness distribution became nonuniform arose. The cause of the nonuniform thickness distribution is considered to be so-called "dripping" because lens surfaces are formed from convex and concave curved surfaces.

Dripping is a phenomenon in which a coating film gradually flows by its own weight and gathers on the lower side of a curvature surface (the peripheral portion of a convex curved surface or the central portion of a concave curved surface). The dripping can be suppressed to a certain degree by reducing the fluidity of the coating solution. However, if the coating solution is less fluid, the film surface is formed not smoothly but into a so-called "orange peel surface".

It is an object of the present invention to provide a method for manufacturing an optical lens, in which a coating solution having normal fluidity can be applied thick to a lens surface without causing dripping.

### Means of Solution to the Problem

To achieve this object, according to the present invention, there is provided a method for manufacturing an optical lens, comprising the steps of as a first coating condition, setting an angle of an axis of an optical lens substrate with respect to a horizontal direction within a predetermined angle range with reference to a convex surface side, as a second coating condition, rotating the optical lens substrate around the axis at a predetermined rotational speed at which a coating solution on a lens surface of the optical lens substrate is held in a coating position, and when the first coating condition and the second coating condition are satisfied, applying the coating solution to the lens surface of the optical lens substrate, the rotating step including a step of rotating the optical lens substrate within, as the predetermined angle range, a range between a maximum inclination angle of the axis at which a peripheral edge of the lens surface is positioned at the highest position of the lens surface of the optical lens substrate, and a maximum inclination angle of the axis at which the peripheral edge of the lens surface is positioned at the lowest position of the lens surface of the optical lens substrate.

### Effect of the Invention

According to the present invention, the direction of gravity acting on a coating solution adhered to an optical lens substrate alternately changes between the central direction and peripheral direction of a lens along with rotation of the optical lens substrate. For this reason, the coating solution adhered to the rotating optical lens substrate does not flow in one direction though it is fluid. Since the influence of gravity, which is a prime factor of "dripping", can be canceled by longitudinal rotation of the optical lens substrate, "dripping" of the coating solution flowing along the lens surface does not occur. The present invention can therefore provide a method for manufacturing an optical lens, in which a coating solution having normal fluidity can be applied thick to a lens surface without causing dripping.

### Brief Description of Drawings

Fig. 1 is a sectional view showing a spectacle lens substrate on which a hard coat film is formed by a method for manufacturing a spectacle lens according to the first embodiment;
Fig. 2 is a flowchart for explaining the method for manufacturing a spectacle lens according to the first embodiment;
Fig. 3 is a side view showing the spectacle lens substrate inclined so that a convex curved surface is directed obliquely upward;
Fig. 4 is a side view showing the spectacle lens substrate inclined so that the convex curved surface is directed obliquely downward;
Fig. 5 is a side view showing a rotating apparatus;
Fig. 6 is a side view showing the rotating apparatus, and a coating apparatus that executes a coating step;
Fig. 7 is a front view showing a lens surface for explaining a plurality of coating regions according to the second embodiment;
Fig. 8 is a flowchart for explaining a method for manufacturing a spectacle lens according to the second embodiment;
Fig. 9 is a side view showing a spectacle lens substrate and a coating nozzle for explaining the coating direction according to the third embodiment;
Fig. 10 is a flowchart for explaining a method for manufacturing a spectacle lens according to the third embodiment;
Fig. 11 is a flowchart for explaining a method for manufacturing a spectacle lens according to the fourth embodiment; and
Fig. 12 is a sectional view showing a curing apparatus that executes a curing step.

### Best Mode for Carrying Out the Invention

### (First Embodiment)

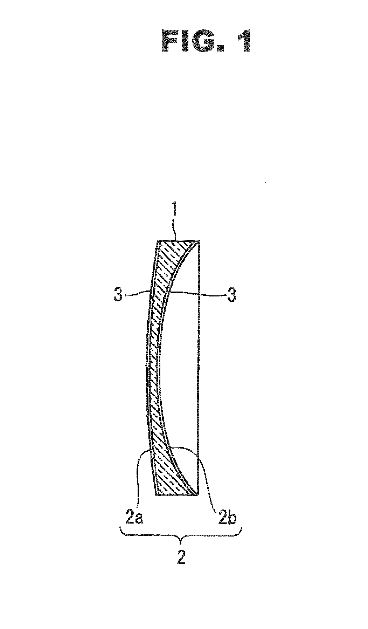

An embodiment of a method for manufacturing an optical lens according to the present invention will now be described in detail with reference to Figs. 1 to 6. A form in which the present invention is applied to a spectacle lens will be explained here.

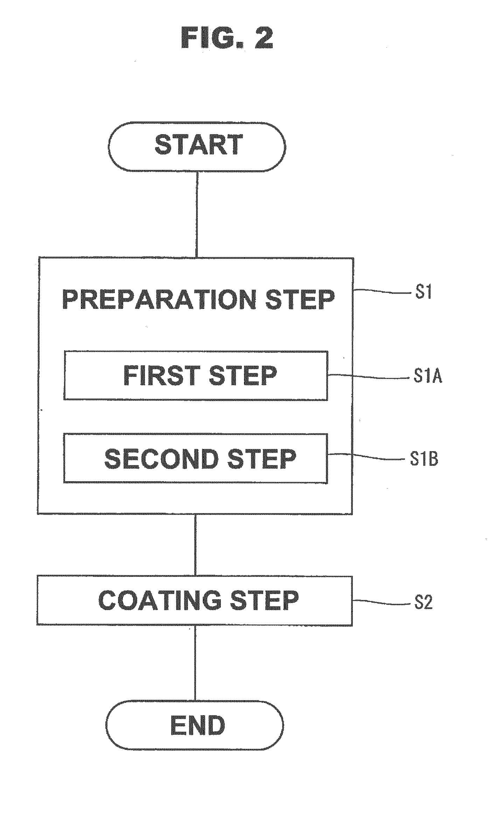

A method for manufacturing a spectacle lens according to this embodiment is a method for longitudinally rotating a spectacle lens substrate 1 shown in Fig. 1, and applying a coating solution 3 to a lens surface 2 (a convex curved surface 2a and a concave curved surface 2b). For convenience, the coating solution 3 shown in Fig. 1 is illustrated to be thicker than it really is. The method for manufacturing a spectacle lens is executed by preparation step S1 and coating step S2, as shown in the flowchart of Fig. 2.

Preparation step S1 is a step for satisfying conditions (coating solution application conditions) for applying the coating solution 3. The coating solution application conditions are made up of first step S1A for satisfying the first condition to be described later, and second step S1B for satisfying the second condition to be described later.

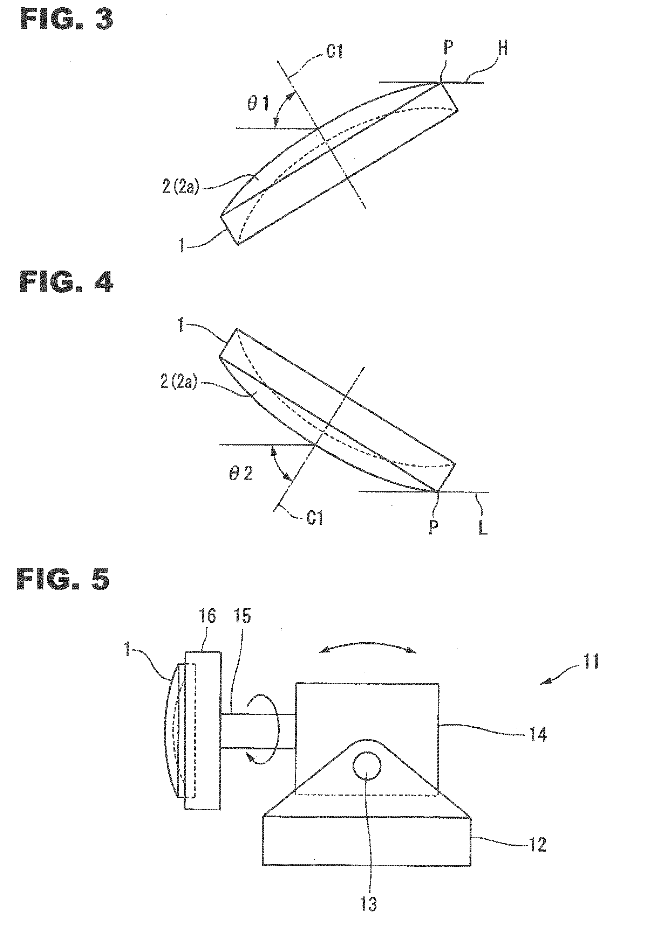

The first condition is satisfied when the angle of an axis C1 of the spectacle lens substrate 1 with respect to the horizontal direction falls within a predetermined angle range, as shown in Figs. 3 and 4. The predetermined angle range is a range between an angle θ1 shown in Fig. 3 and an angle θ2 shown in Fig. 4. The angle θ1 shown in Fig. 3 is the maximum inclination angle of the axis C1 when the spectacle lens substrate 1 is inclined clockwise in Fig. 3 (direction in which the lens surface 2 formed from the convex curved surface 2a is directed upward) from a state in which the axis C1 is horizontal, so as to keep a state in which a peripheral edge P of the lens surface 2 is positioned at the highest position H of the lens surface 2.

The angle θ2 shown in Fig. 4 is the maximum inclination angle of the axis C1 when the spectacle lens substrate 1 is inclined counterclockwise in Fig. 4 (direction in which the lens surface 2 formed from the convex curved surface 2a is directed downward) from a state in which the axis is horizontal, so as to keep a state in which the peripheral edge P of the lens surface 2 is positioned at the lowest position L of the lens surface 2.

The second condition is satisfied by rotating the spectacle lens substrate 1 around the axis C1 at a predetermined rotational speed. To rotate the optical lens substrate 1 at the predetermined rotational speed in a state in which the first condition is satisfied, the substrate 1 is held by a rotating apparatus 11, as shown in Fig. 5. The rotating apparatus 11 includes a support table 12, a rotation driving unit 14 that is supported by the support table 12 pivotally via a horizontal support shaft 13, and a holder 16 attached to a rotation shaft 15 of the rotation driving unit 14.

The rotation driving unit 14 is inclined with respect to the support table 12 about the support shaft 13 so that the substrate 1 is inclined at a desired angle. The rotation driving unit 14 rotates the rotation shaft 15 at a predetermined constant rotational speed. The rotational speed can be, for example, about 15 to 50 RPM in correspondence with the fluidity of the coating solution 3. Note that the rotational speed of the rotation shaft 15 is not limited to the above-mentioned range. When the coating solution 3 is highly fluid, the rotational speed is set to be relatively low. The rotational speed is set to be a speed at which the coating solution 3 does not flow toward the periphery of the lens surface 2 by the centrifugal force. The holder 16 holds the substrate 1. The holder 16 sandwiches the peripheral surface of the substrate 1 by a plurality of clamp members, and holds the substrate 1 on the same axis as the rotation shaft 15, details of which are not illustrated.

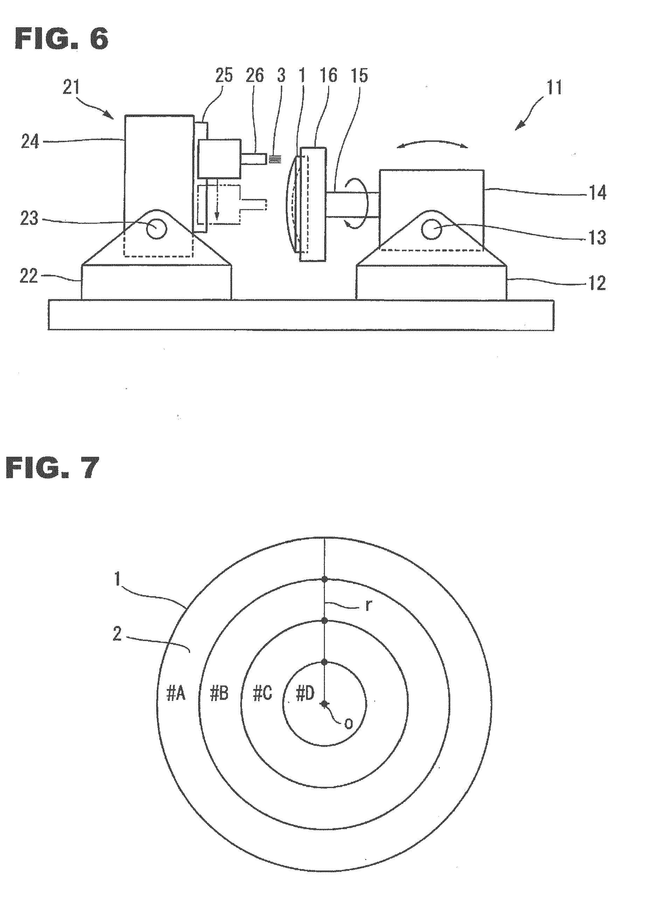

Coating step S2 is a step of applying the coating solution 3 to the lens surface 2 of the substrate 1. The coating solution 3 is applied to the substrate 1 by a coating apparatus 21 shown in Fig. 6. The coating apparatus 21 includes a support member 22, and a coating unit 24 that is supported by the support member 22 pivotally via a horizontal support shaft 23. The coating unit 24 supports a coating nozzle 26 via a translation mechanism 25. The coating nozzle 26 ejects the coating solution 3, and is driven to move in the radial direction of the substrate 1 by the translation mechanism 25.

The ejection direction of the coating solution 3 can be changed appropriately by inclining the coating unit 24 with respect to the support member 22. More specifically, when the axis C1 of the substrate 1 is not horizontal and is inclined with respect to the horizontal direction, the coating unit 24 is inclined with respect to the support member 22 so as to eject the coating solution 3 with reference to the axis C1 of the substrate 1.

The coating solution 3 is a general fluid coating solution such as a coating solution for forming a hard coat film or a coating solution for forming a photochronic film. The coating solution 3 is supplied from a supply device (not shown) to the coating nozzle 26.

The coating nozzle 26 according to this embodiment ejects small droplets of the coating solution 3 in a constant ejection amount by the spray coat method. The range where the coating nozzle 26 applies the coating solution 3 is narrower than the lens surface 2. The coating nozzle 26 is moved in the radial direction of the substrate 1 by the translation mechanism 25 in a state in which the coating solution 3 is sprayed to the lens surface 2.

That is, the coating solution 3 can be applied to the entire lens surface 2 by moving, in the radial direction of the substrate 1, the range where the coating nozzle 26 applies the coating solution 3 in a state in which the substrate 1 rotates. Although not shown, a coating nozzle that ejects a liquid coating solution 3 can be used as the coating nozzle 26.

The translation mechanism 25 is configured to be able to change the moving speed in accordance with the position of the coating nozzle 26. When the coating nozzle 26 faces the peripheral portion of the substrate 1, the moving speed of the coating nozzle 26 becomes lower than that when the coating nozzle 26 faces the central portion of the substrate 1.

When executing the method for manufacturing a spectacle lens according to this embodiment, first, preparation step S1 is executed. In preparation step S1, the substrate 1 is mounted on the rotating apparatus 11 and is stood to set the axis C1 at a predetermined inclination angle. Then, the substrate 1 is rotated at a predetermined rotational speed. The substrate 1 is stood so that the axis C1 becomes horizontal and the lens surface 2 extends vertically, as shown in, for example, Fig. 5. The substrate 1 is driven to rotate at the predetermined rotational speed by the rotating apparatus 11.

Then, coating step S2 is executed. In coating step S2, as shown in Fig. 6, the coating nozzle 26 is caused to face the convex curved surface 2a or concave curved surface 2b of the lens surface 2 in a state in which the substrate 1 rotates longitudinally, as described above. The coating nozzle 26 ejects the coating solution 3. In this embodiment, droplets of the coating solution 3 are ejected parallel to the axis C1 of the substrate 1 from the coating nozzle 26, and sprayed to the lens surface 2. The coating nozzle 26 according to this embodiment is driven to translate in the radial direction of the substrate 1 from the peripheral portion to central portion of the lens surface 2 by the translation mechanism 25.

Hence, the coating solution 3 is sequentially applied to the substrate 1 during rotation from the peripheral portion toward the central portion. The applied coating solution 3 rotates together with the substrate 1. The direction of gravity acting on the coating solution 3 adhered to the substrate 1 alternately changes between the central direction and peripheral direction of the lens along with rotation of the substrate 1. Since the direction in which the gravity acts is not constant, the coating solution 3 does not flow in one direction and stays at the adhesion position though it is fluid. Since the influence of gravity, which is a prime factor of "dripping", can be canceled by longitudinal rotation of the spectacle lens substrate 1, "dripping" of the coating solution 3 flowing along the lens surface 2 does not occur.

According to this embodiment, therefore, the coating solution 3 having normal fluidity can be applied thick to the lens surface 2 without causing dripping. According to this embodiment, in coating step S2, a layer of the coating solution 3 with a thickness of at least 10 µm could be formed to have a uniform thickness on the entire lens surface 2. When a coating solution for forming a hard coat film is used as the coating solution 3, a hard coat film is formed on the substrate 1 at a film thickness of at least 10 µm. A spectacle lens having a hard coat film of such a thickness is much higher in scratch resistance than a conventional spectacle lens. In addition, interference fringes are reduced.

Note that the coating apparatus 21 shown in Fig. 6 is so illustrated that the coating nozzle 26 moves from top to bottom, but the present invention is not limited to this. That is, the same effects as those described above can be obtained even when the coating nozzle 26 moves from the lower end side to upper side (center side) of the lens surface 2 or the coating nozzle 26 moves horizontally.

Coating step S2 ends after rotation of the substrate 1 continues by a predetermined time while maintaining a state in which the first and second conditions are satisfied even after the end of applying the coating solution 3. The time during which rotation of the substrate 1 continues is the time by which the fluidity of the coating solution 3 is lost to a degree at which the coating solution 3 applied to the substrate 1 does not move on the substrate 1. A coating solution 3 containing a volatile solvent increases in viscosity and decreases in fluidity when part of the solvent evaporates after application. An ultraviolet curing coating solution 3 increases in viscosity and decreases in fluidity upon irradiation with ultraviolet rays contained in the illumination in a coating environment. That is, in this embodiment, rotation of the substrate 1 stops after the fluidity of the coating solution 3 becomes low so that the coating solution 3 does not move on the substrate 1. Thus, the next step, for example, a curing step for curing the coating solution 3 can be executed in a state in which the coating solution 3 applied thick is held on the substrate 1 and so-called "dripping" does not occur.

This embodiment has described an example in which coating step S2 ends by stopping rotation of the substrate 1 after the fluidity of the coating solution 3 decreases. However, coating step S2 can be ended in a state in which the substrate 1 rotates. In this case, coating step S2 ends in a state in which the substrate 1 rotates, and the next step (for example, curing step) is executed in this state. This method can be implemented by, for example, moving the rotating apparatus 11 between the coating apparatus 21, and a curing apparatus (not shown) including a heater or ultraviolet lamp for curing the coating solution 3. More specifically, the substrate 1 is transferred from the coating apparatus 21 to the curing apparatus while it is driven to rotate by the rotating apparatus 11.

### (Second Embodiment)

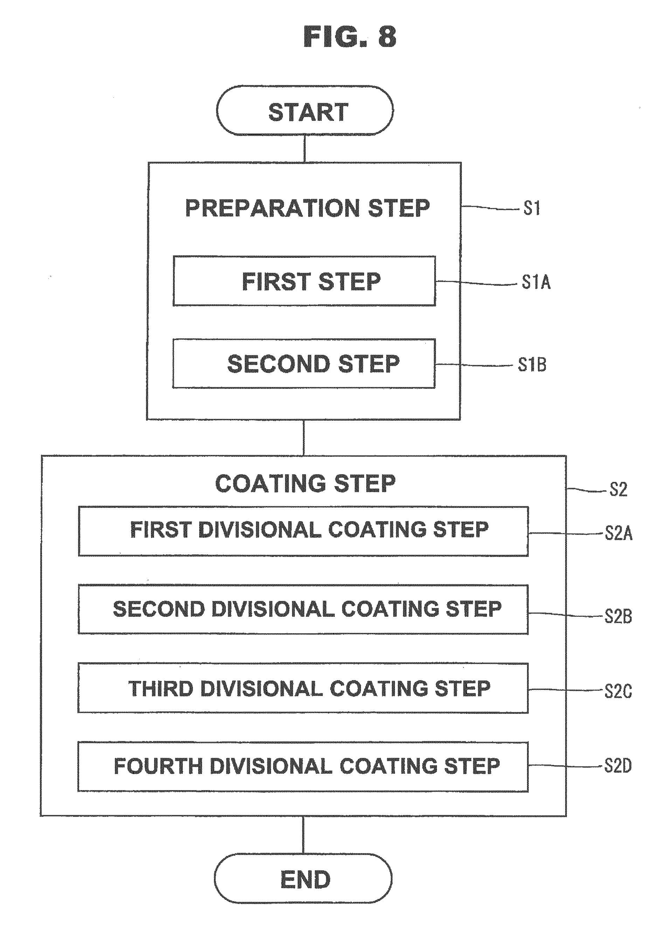

A coating solution can be applied by changing settings for respective coating regions, as shown in Figs. 7 and 8. In this embodiment, the same reference numerals as those described with reference to Figs. 1 to 6 denote the same parts, and a detailed description thereof will be omitted properly. Fig. 7 is a front view showing a lens surface for explaining another embodiment of coating step S2. Fig. 8 is a flowchart for explaining a method for manufacturing a spectacle lens according to this embodiment. The method for manufacturing a spectacle lens according to this embodiment is a method constituting an invention described in claim 2.

The method for manufacturing a spectacle lens according to this embodiment is executed by, for example, preparation step S1, and coating step S2 including first to fourth divisional coating steps S2A to S2D to be described later, as shown in, for example, Fig. 8.

Coating step S2 is performed by changing a parameter regarding coating for respective coating regions #A to #D shown in Fig. 7. When applying a coating solution 3 in the respective coating regions #A to #D, the coating solution 3 is applied by the same method as that when the first embodiment is adopted. More specifically, a coating nozzle 26 sprays droplets of the coating solution 3 in a predetermined amount to a target coating position at part of a lens surface 2. In addition, the target coating position is moved in the radial direction of the lens surface 2. The coating nozzle 26 according to this embodiment translates from the periphery to center of the lens surface 2 (a convex curved surface 2a or a concave curved surface 2b).

In this embodiment, the parameter which is changed in regard to coating is the moving speed of the coating nozzle 26. This moving speed is set for the respective coating regions #A to #D shown in Fig. 7. The plurality of coating regions #A to #D shown in Fig. 7 are formed by dividing a radius r from a center O to periphery of the lens surface 2 by every predetermined interval, and dividing the lens surface 2 by circles passing through the respective division points. The center of each circle passing through each division point coincides with the center of the lens surface 2. That is, the coating regions #A to #D are formed by dividing the lens surface 2 into a plurality of concentric circles.

The moving speed of the coating nozzle 26 is set based on the areas of the coating regions #A to #D. The moving speed decreases as the area increases. That is, the moving speed becomes lowest when the coating solution 3 is applied to the first coating region #A including the peripheral edge of the lens surface 2, and increases when the coating solution 3 is applied to the second coating region #B positioned inside the first coating region #A in the radial direction. For this reason, the moving speed becomes higher when coating the third coating region #C than when coating the second coating region #B, and higher when coating the fourth coating region #D than when coating the third coating region #C.

As shown in Fig. 8, coating step S2 according to this embodiment is executed by first to fourth divisional coating steps S2A to S2D. First divisional coating step S2A is a step of applying the coating solution 3 to the first coating region #A positioned on the outermost peripheral side out of the first to fourth coating regions #A to #D. The moving speed of the coating nozzle 26 at this time is set to be a speed (lowest speed) corresponding to the area of the first coating region #A.

After the end of application up to the inner peripheral end of the first coating region #A, the coating solution 3 is applied to the second coating region #B in second divisional coating step S2B. After applying the coating solution 3 to the second coating region #B, the process advances from third divisional coating step S2C to fourth divisional coating step S2D. The coating nozzle 26 moves at moving speeds corresponding to areas to apply the coating solution 3 to even the third and fourth coating regions #C and #D.

According to this embodiment, the coating solution 3 is applied in coating step S2 so that the adhesion amount of the coating solution 3 per unit area becomes a predetermined amount on the entire lens surface 2. The coating solution 3 can therefore be applied to have a uniform film thickness on the entire lens surface 2. In particular, the adhesion amount of the coating solution 3 can be controlled based on the area of the lens surface 2, so the control of the adhesion amount can be simplified. In this embodiment, when dividing the lens surface 2 into the plurality of coating regions #A to #D, the radius of the lens surface 2 is divided at equal intervals, and the lens surface 2 is divided by circles passing through the division points. Thus, the areas of the coating regions #A to #D can be calculated easily.

Note that the above-described "parameter that is changed in regard to coating" is not limited to the moving speed of the coating nozzle 26, and may be, for example, the ejection amount of the coating solution 3 ejected from the coating nozzle 26 or both the moving speed and ejection amount. When changing the ejection amount of the coating solution 3, for example, the moving speed of the coating nozzle 26 is kept constant, and the ejection amount of the coating solution 3 is maximized at the time of coating the first coating region #A. In this case, when applying the coating solution 3 to the second to fourth coating regions #B to #D, the ejection amount of the coating solution 3 is desirably decreased in the order named.

### (Third Embodiment)

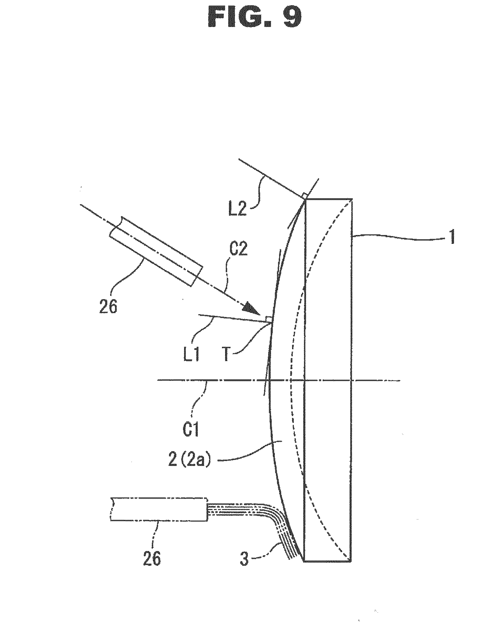

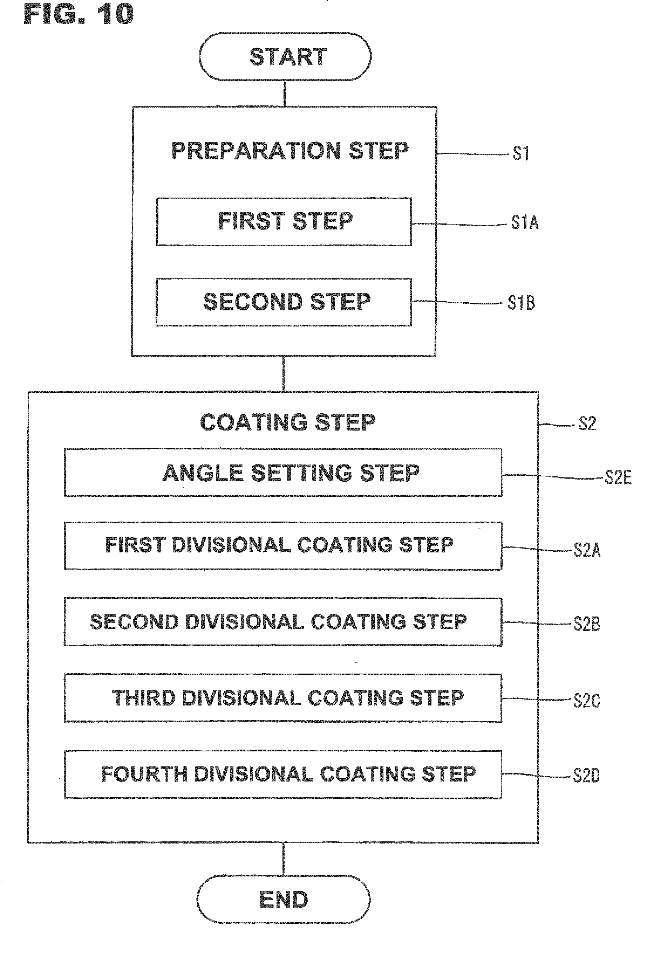

The direction in which a coating solution is applied in a coating step can be a direction inclined with respect to the axis of a substrate. This embodiment will be described in detail with reference to Figs. 9 and 10. In Figs. 9 and 10, the same reference numerals as those described with reference to Figs. 1 to 8 denote the same parts, and a detailed description thereof will be omitted properly.

In a substrate 1 shown in Fig. 9, the curvature of a lens surface 2 (a convex curved surface 2a) relatively increases. When a coating solution 3 is sprayed parallel to the axial direction of the substrate 1 to the lens surface 2 having a large curvature, droplets of the coating solution 3 are adhered to the lens surface 2 at the peripheral portion of the lens surface 2 while flowing toward the peripheral edge, as indicated by a chain double-dashed line in Fig. 9. As a result, the thickness of the coating solution 3 applied to the central portion of the lens surface 2 becomes smaller than that of the coating solution 3 applied at the peripheral portion.

In this embodiment, the coating solution 3 is obliquely applied to the lens surface 2 so that the coating solution 3 flows toward the center of the lens surface 2 to cancel the above-described problem. The coating direction of the coating solution 3 according to this embodiment is a direction toward a target coating position T on a side opposite to an axis C1 of the substrate 1 with respect to a normal L1 passing through the target coating position T of the lens surface 2, as shown in Fig. 9. A center line C2 of a coating nozzle 26 according to this embodiment is almost parallel to a normal L2 at the peripheral edge of the lens surface 2 on a virtual plane including the axis C1 of the substrate 1 and the normal L1, as shown in Fig. 9.

Coating step S2 according to this embodiment is executed by angle setting step S2E, and first to fourth divisional coating steps S2A to S2D, as shown in the flowchart of Fig. 10. First to fourth divisional coating steps S2A to S2D are the same as the steps described in the second embodiment. Angle setting step S2E is a step of setting the coating direction of the coating nozzle 26 to be inclined with respect to the lens surface 2, as described above. By executing angle setting step S2E, the coating nozzle 26 is directed to the target coating position T from a side opposite to the axis C1 of the substrate 1 with respect to the normal L1 passing through the target coating position T of the lens surface 2.

In coating step S2, the coating solution 3 is applied to the entire lens surface 2 in first to fourth divisional coating steps S2A to S2D after setting the angle of the coating nozzle 26 in angle setting step S2E. In first to fourth divisional coating steps S2A to S2D, the coating solution 3 is obliquely applied toward the center of the lens surface 2, so the coating solution 3 applied to the lens surface 2 can be prevented from flowing toward the periphery of the lens surface 2.

According to this embodiment, the coating solution 3 is not applied relatively thick to the peripheral portion of the lens surface 2 owing to dripping, and the film thickness distribution of the lens surface 2 is uniformed. Note that the spray direction of the coating nozzle 26 may be changed in correspondence with the curvature of the target coating position T at the time of translation. With this arrangement, the coating solution 3 can be applied so that the amount in which the coating solution 3 flows toward the center of the lens surface 2 becomes uniform. Therefore, the film thickness distribution is uniformed at high accuracy.

This embodiment has described an example in which, when applying the coating solution 3 in coating step S2, the lens surface 2 is divided into a plurality of coating regions and the moving speed of the coating nozzle 26 is changed for the respective coating regions. However, it is also possible to keep a constant moving speed of the coating nozzle 26 throughout all coating regions, change the ejection amount of the coating solution 3 for the respective coating regions, and apply the coating solution 3.

### (Fourth Embodiment)

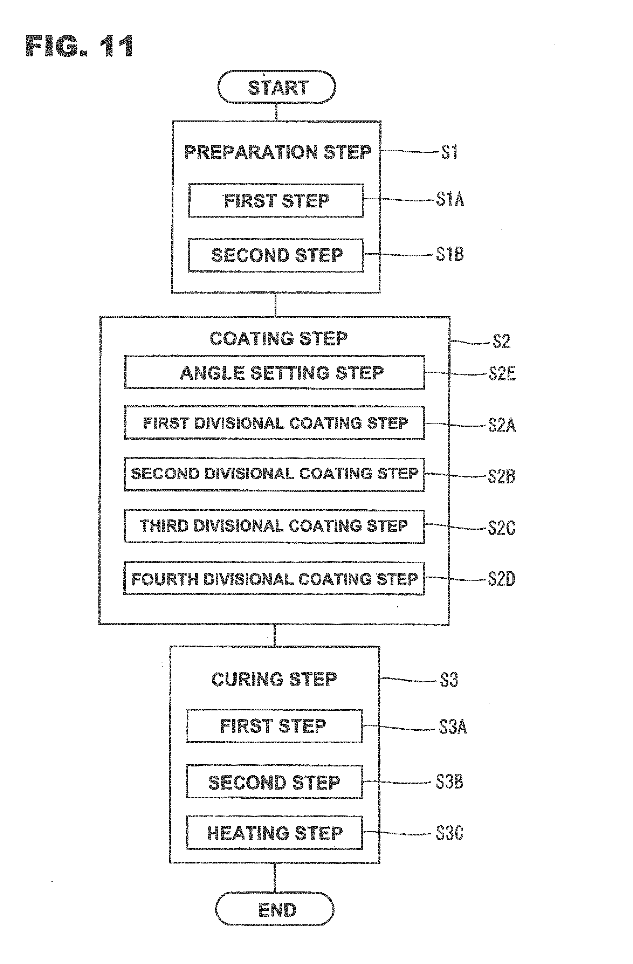

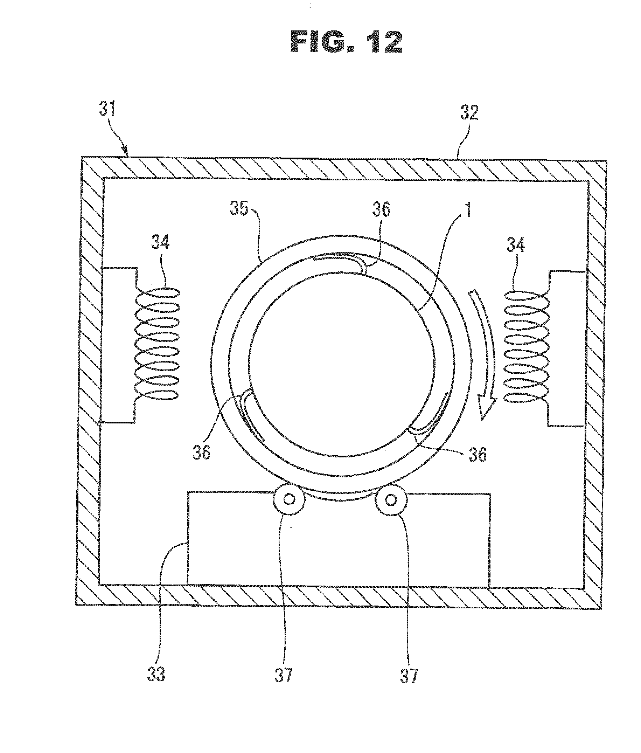

A method for manufacturing an optical lens according to the present invention can execute a curing step after applying a coating solution to a lens surface, as shown in Figs. 11 and 12. In Figs. 11 and 12, the same reference numerals as those described with reference to Figs. 1 to 10 denote the same parts, and a detailed description thereof will be omitted properly.

When a spectacle lens substrate 1 is placed horizontally, a coating solution 3, which has been applied to a lens surface 2 of the substrate 1 to have a thickness of more than 10 µm, flows by its own weight, drips, and gathers to a lower portion (the peripheral portion of a convex curved surface 2a or the central portion of a concave curved surface 2b). The dripping occurs immediately after application of the coating solution 3 as long as the coating solution 3 is fluid, and continues until the drying or curing of the film proceeds and the coating solution 3 loses fluidity. When the coating solution 3 is of a thermosetting type, if the temperature of the solution film rises during curing, the viscosity decreases and dripping occurs seriously. Even if the coating solution 3 can be applied thick to have a uniform thickness, dripping occurs at the time of curing and may finally lead to a film thickness failure.

A method for manufacturing an optical lens according to this embodiment includes curing step S3 that is performed under the same conditions as those of coating step S2 after coating step S2 of applying the coating solution 3 to the spectacle lens substrate 1, as shown in Fig. 11. Curing step S3 is executed by first step S3A that satisfies the first condition, second step S3B that satisfies the second condition, and heating step S3C. Heating step S3C is executed by heating the coating solution 3 together with the substrate 1 while rotating the substrate 1 longitudinally at a predetermined rotational speed (about 15 to 50 RPM) in a state in which the first and second steps are executed, that is, a state in which the substrate 1 is inclined so that the angle of an axis C1 with respect to the horizontal direction falls within a predetermined angle range. Heating is performed until at least the fluidity of the coating solution 3 is lost.

Curing step S3 can be executed using, for example, a curing apparatus 31 shown in Fig. 12. The curing apparatus 31 includes a curing vessel 32, and a rolling device 33 accommodated in the curing vessel 32. When the coating solution 3 is of a thermosetting type, the curing vessel 32 includes a heater 34. When the coating solution 3 is of an ultraviolet curing type, the curing vessel 32 includes an ultraviolet lamp (not shown).

The rolling device 33 is used to rotate the substrate 1 together with a holder 35. The holder 35 is formed into a cylindrical shape capable of accommodating the substrate 1. A plurality of clamp members 36 sandwich the peripheral surface of the substrate 1 and hold the substrate 1 on a single axis. The holder 35 is placed on two rollers 37 of the rolling device 33 in a state in which the holder 35 stands so that the axis is directed horizontally.

The rollers 37 are driven by a motor (not shown) and rotate at a predetermined rotational speed in the same direction. Along with the rotation of the rollers 37, the substrate 1 rotates together with the holder 35. That is, the curing apparatus 31 can be used to heat the substrate 1 while rotating it longitudinally within the curing vessel 32, and cure the coating solution 3.

By the method for manufacturing a spectacle lens according to this embodiment, heating step S3C is executed in a state in which the first and second conditions to execute coating step S2 are satisfied. The coating solution 3 can therefore be cured in a state in which the coating solution 3 does not flow in one direction by the gravity. According to this embodiment, the coating solution 3 is cured while maintaining a state in which the coating solution 3 is applied to have a uniform film thickness on the lens surface 2. Hence, a high-quality film is formed.

Note that this embodiment has described an example in which, when applying the coating solution 3 in coating step S2, the lens surface 2 is divided into a plurality of coating regions and the moving speed of a coating nozzle 26 is changed for the respective coating regions. However, it is also possible to keep a constant moving speed of the coating nozzle 26 throughout all coating regions, change the ejection amount of the coating solution 3 for the respective coating regions, and apply the coating solution 3.

To form, for example, a hard coat film on the spectacle lens substrate 1, the coating solution 3 is applied to either one of the convex curved surface 2a and concave curved surface 2b of the lens surfaces 2, and subsequently applied to the other one of the convex curved surface 2a and concave curved surface 2b of the lens surfaces 2. After that, the coating solution 3 applied to the two lens surfaces 2 is cured to a degree at which fluidity is lost. By employing this method, the coating solution 3 applied to the two, convex curved surface 2a and concave curved surface 2b can be cured efficiently. Also, by employing this method, for example, when application of the coating solution 3 to the convex curved surface 2a has ended and the coating solution 3 is applied to the concave curved surface 2b, even if a droplet of the coating solution 3 moves around to the convex curved surface 2a and is adhered to the convex curved surface 2a, this droplet is absorbed in a coating film on the convex curved surface 2a, keeping a good outer appearance. The method for manufacturing an optical lens according to the present invention is applicable when performing application of the coating solution 3 to the convex curved surface 2a, application of the coating solution 3 to the concave curved surface 2b, and curing of the coating solution 3 applied to the convex curved surface 2a and the concave curved surface 2b.

Application of the coating solution 3 to the two lens surfaces 2, and curing of it can also be performed for every lens surface 2. In this case, the coating solution 3 is applied to either one of the convex curved surface 2a and concave curved surface 2b of the lens surfaces 2, and is cured to a degree at which fluidity is lost. After that, the coating solution 3 is applied to the other one of the convex curved surface 2a and concave curved surface 2b of the lens surfaces 2, and is cured. Even in this case, the present invention is applicable when performing application of the coating solution 3 to the respective lens surfaces 2 and curing of the coating solution 3 applied to the two lens surfaces 2.

Note that the implementation of the present invention is not limited to the method explained in each of the above-described embodiments, but can be appropriately changed. The above-described embodiments have explained an example in which a film such as a hard coat film or a photochronic film is formed on the spectacle lens substrate 1. However, the present invention is applicable to even another optical lens different from a spectacle lens.

### Examples

The present invention will be further explained by examples. However, the present invention is not limited to aspects described in the examples.

### 1. Preparation of Coating Solution 3 for Forming Hard Coat

As a solvent, 20 parts by mass of methanol were added to 17 parts by mass of an organosilicon compound "γ-glycidoxypropyl trimethoxysilane" (KBM-403 available from Shin-Etsu Chemical). After the solution was stirred for 10 min, 3.9 parts by mass of 0.1 mol/L hydrochloric acid were added as a hydrolysis catalyst and the resultant solution was stirred for 24 h. Then, 20 parts by mass of isopropyl alcohol and 44 parts by mass of methanol-dispersed colloidal silica (methanol silica-sol available from Nissan Chemical Industries) were added to the obtained solution, and the solution was stirred at room temperature for 10 min.

After stirring for 10 min, 1 mass part of aluminum acetylacetonate and 0.1 mass part of a leveling agent (FZ-77 available from Dow Corning Tray) were added as a curing agent. The resultant solution was further stirred at room temperature for 48 h, preparing a coating solution for forming a hard coat. The viscosity of the obtained coating solution was 7 mPa·S (20°C).

### 2. Examples and Comparative Examples of Hard Coat Formation by Spray Coating

### [Example 1]

The coating solution prepared in "1." was applied to the surface of a plastic lens substrate by an ultrasonic atomizer available from Sono-Tek. Coating was performed on, as the lens substrate, the concave and convex surfaces of a plastic lens (trade name "New Looks 1.6"), available from HOYA, with a power of -2.0 D, a curvature radius R of the convex surface = 300 mm, and R of the concave surface = 150 mm.

The lens was set in the lens holder, and rotated at a rotational speed of 50 rpm so that the axis of the lens became horizontal. While rotating the lens, a coating solution 3 was sprayed onto the concave and convex surfaces from the above-mentioned spray nozzle arranged on the optical axis of the lens. The spray nozzle moved from the peripheral portion to central portion of the lens at a constant speed of 30 mm/min, and sprayed the spray solution in a constant amount of 1.0 ml/min.

After coating, the lens surfaces were heated to 50°C by panel heaters arranged on the two side surfaces of the lens while maintaining the lens angle and the rotational speed. The heating was performed for 2 min until the coating solution lost fluidity. Then, the lens was detached from the lens holder, and heated and cured in a thermosetting oven at 100°C for 1 h. The outer appearance of the coating film of the obtained lens was inspected, and film thicknesses at the central and peripheral portions of the lens were measured. The film thickness measurement was performed using a film thickness measurement system available from OptoSirius.

### [Example 2]

Coating was performed following the same procedure as that in Example 1 except that, when moving the spray nozzle from the peripheral portion to central portion of a lens, an area was calculated for every area concentrically divided at a 5-mm pitch, and the moving speed was adjusted in accordance with the calculated area.

### [Example 3]

Coating was performed by the same method as that in Example 2 except that, when coating the convex surface side of a lens, the nozzle was inclined toward the peripheral side at an angle of 30° with respect to the axis.

### [Comparative Example 1]

Coating was performed by the same method as that in Example 2 except that a lens was rotated so that the axis of the lens became vertical (the lens was rotated horizontally).

### [Comparative Example 2]

Coating was performed by the same method as that in Example 2 except that, when rotating a lens, the rotational speed was set to be 100 rpm.

### [Comparative Example 3]

Coating was performed by the same method as that in Example 3 except that, when rotating a lens, the rotational speed was set to be 100 rpm.

In Examples 1 to 3 and Comparative Examples 1 to 3, the presence/absence of dripping and an orange peel surface on a convex surface, and the presence/absence of dripping and an orange peel surface on a concave surface were visually checked, and the film thickness of the convex surface and that of the concave surface were measured, obtaining results as shown in Table 1 below. As the results of the visual check in Table 1, ⊚ represents "absent", ○ represents "almost absent", Δ represents "slightly present", and X represents "remarkably present".

**[Table 1]**

| No. | Results | | | | | | | |
|---|---|---|---|---|---|---|---|---|
| | Dripping on Convex Surface | Dripping on Concave Surface | Orange Peel Surface on Convex Surface | Orange Peel Surface on Concave Surface | Film Thickness of Film Thickness of Convex Surface (µm) Concave Surface (µm) | | | |
| | | | | | Central Portion | Peripheral Portion | Central Portion | Peripheral Portion |
| Comparative Example 1 | ○ | ○ | Δ | Δ | 16 | 11 | 18 | 10 |
| Example 1 | ○ | ⊚ | ○ | ⊚ | 15 | 20 | 19 | 21 |
| Example 2 | ⊚ | - | ⊚ | - | 20 | 19 | - | - |
| Example 3 | × | × | Δ | Δ | 12 | 20 | 27 | 13 |
| Comparative Example 2 | × | Δ | Δ | ○ | 12 | 23 | 16 | 25 |
| Comparative Example 3 | × | - | ○ | - | 15 | 23 | - | - |

### Explanation of the Reference Numerals and Signs

1... spectacle lens substrate, 2...lens surface, 2a...convex curved surface, 2b...concave curved surface, θ1, θ2...angle, H...high position, P...peripheral edge, T...target coating position, L1...normal

## Claims

1. A method for manufacturing an optical lens, comprising the steps of:
as a first coating condition, setting an angle of an axis of an optical lens substrate with respect to a horizontal direction within a predetermined angle range with reference to a convex surface side;
as a second coating condition, rotating the optical lens substrate around the axis at a predetermined rotational speed at which a coating solution on a lens surface of the optical lens substrate is held in a coating position; and
when the first coating condition and the second coating condition are satisfied, coating the lens surface of the optical lens substrate with the coating solution,
the rotating step including a step of rotating the optical lens substrate within, as the predetermined angle range, a range between a maximum inclination angle of the axis at which a peripheral edge of the lens surface is positioned at the highest position of the lens surface of the optical lens substrate, and a maximum inclination angle of the axis at which the peripheral edge of the lens surface is positioned at the lowest position of the lens surface of the optical lens substrate.

2. The method for manufacturing an optical lens according to claim 1, wherein the coating step includes a step of spraying a droplet of the coating solution to a target coating position moving between a peripheral portion and central portion of the lens surface so as to set an adhesion amount of the coating solution per unit area to be a predetermined amount on the entire lens surface of the optical lens substrate.

3. The method for manufacturing an optical lens according to claim 2, wherein the coating step includes a step of, when applying a droplet of the coating solution to a lens surface formed from a convex curved surface, applying the droplet of the coating solution in a direction toward the target coating position on a side opposite to the axis of the optical lens substrate with respect to a normal passing through the target coating position of the lens surface of the optical lens substrate.

4. The method for manufacturing an optical lens according to claim 1, further comprising a step of curing the coating solution on the lens surface of the optical lens in a state in which the first condition and the second condition are satisfied after applying the coating solution to the lens surface of the optical lens substrate.
